# EUROPEAN PATENT APPLICATION

(11) **EP 3 312 728 A1**
(43) Date of publication of application: **25.04.2018**
(21) Application number: 16811231.6
(22) Date of filing: 13.06.2016
(51) Int. Cl.: G06F 11/34, G06F 9/50

(54) **SERVICE MANAGEMENT SYSTEM, SERVICE MANAGEMENT METHOD, AND RECORDING MEDIUM**

(30) Priority: 16.06.2015 JP 2015120739
(71) Applicant: NEC Corporation, Tokyo 108-8001 (JP)
(72) Inventor: KOIZUMI, Seiichi, Tokyo 108-8001 (JP)
(74) Representative: Vossius & Partner Patentanwälte Rechtsanwälte mbB
(86) International application number: PCT/JP2016/002842
(87) International publication number: WO 2016/203756

(57) **Abstract**

The present invention accurately estimates the processing performance of a node. A service management system 100 according to the present invention includes a feature value calculation unit 114 and a performance model creation unit 116. The feature value calculation unit 114 calculates the feature value of each of one or more words included in a function rule pertaining to the service provided by a node. The performance model creation unit 116 creates, on the basis of the processing performance of a node when the function rule is applied to the node, a performance model for correlating the feature value of each of one or more words included in the function rule and the processing performance of the node.

## Description

### [Technical Field]

The present invention relates to a service management system, a service management method, and a recording medium, and more particularly relates to a service management system, a service management method, and a recording medium for managing nodes to provide services.

### [Background Art]

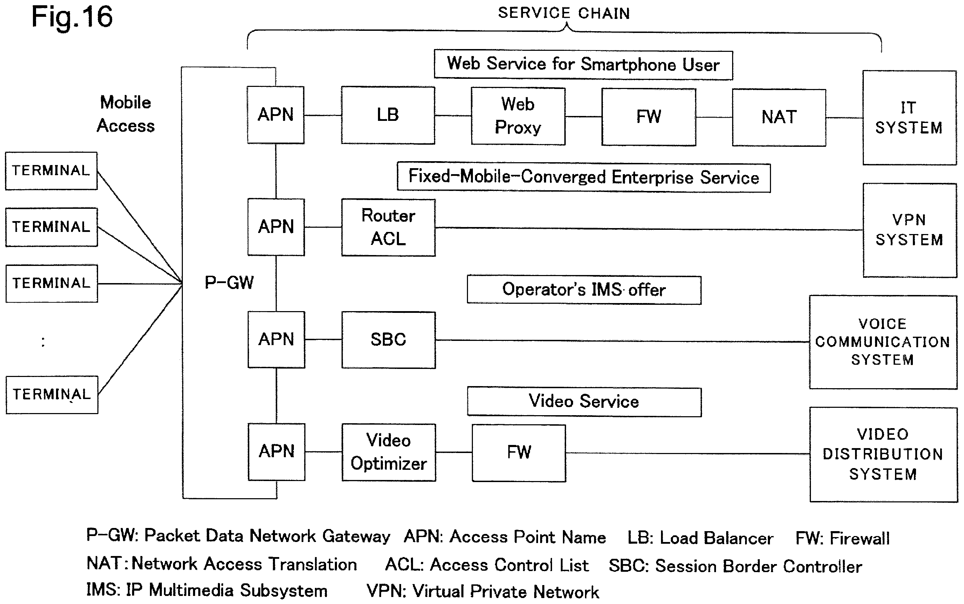

In IT (Information Technology) services such as a Web server for a terminal like a portable telephone or a computer, a video distribution, and a business system and the like, a service provider uses service chains in order to realize network functions for providing the services. Fig. 16 is a diagram illustrating an example of a configuration of typical service chains. In the example illustrated in Fig. 16, service chains are arranged between a terminal-side Packet Data Network Gateway (P-GW) and various service systems. In each of the service chains, nodes such as a Load Balancer (LB), a Firewall (FW), or the like are connected.

The traffic amounts of such IT services fluctuates over time because of a plurality of factors such as the number of users, specific hours of a day, or the like. When a dedicated device is used as each of the nodes, the amount of traffic flowing into the service chain is controlled according to a throughput performance of the service chain, since controlling a throughput performance of each node is difficult.

In recent years, the development of virtualization technology of network functions such as NFV (Network Function Virtualization), SDN (Software Defined Networking), and the like, allows to appropriately control the throughput performance of each node such as the FW, the LB, or the like. In such virtualization technology, the parallel number (scale number) of virtualized node instances are increased (scale out) or decreased (scale in).

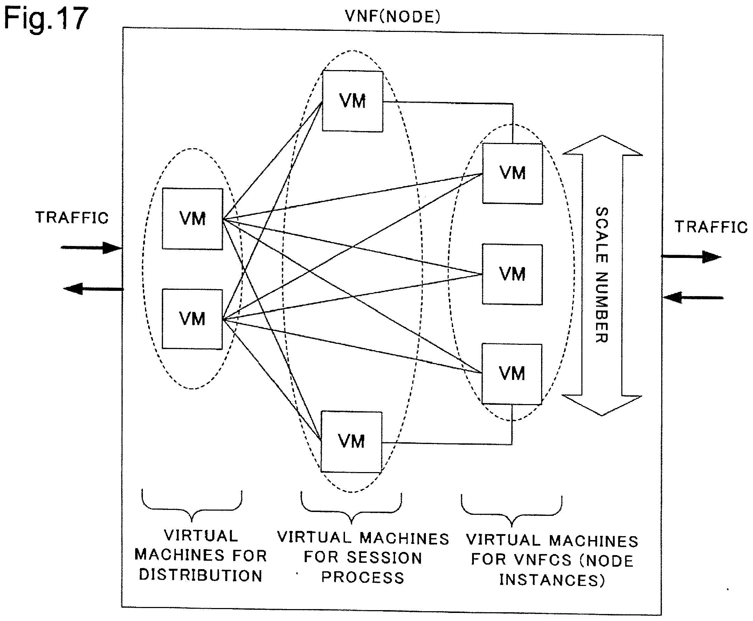

Fig. 17 is a diagram illustrating an example of a node in typical NFV. For example, in NFV, the node which provides each network function is realized by a VNF (Virtualized Network Function). In the VNF, a plurality of VNF components (VNFCs), which are node instances, operate. Each VNFC is an individual virtual machine (VM). A processing performance of the network function is controlled by increasing or decreasing the number of VNFCs.

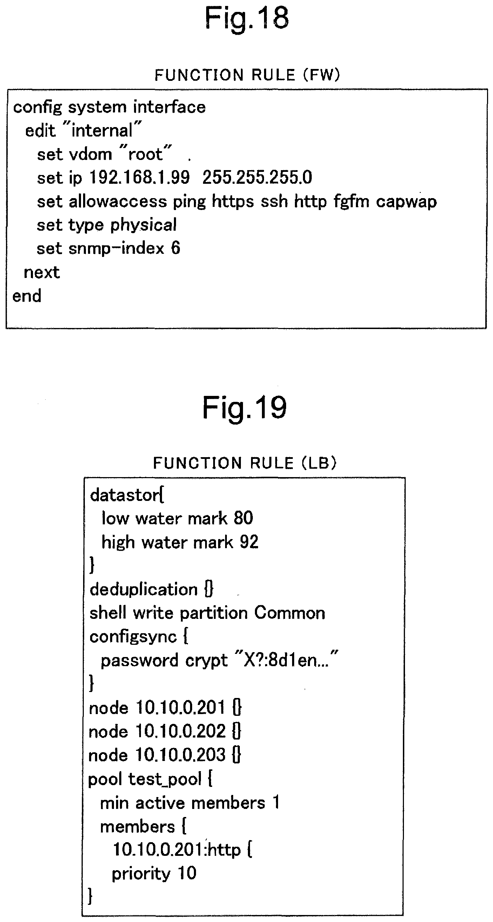

Into each VNFC in VNF, a function rule is set. In the function rule, configurations for providing a function (network function) matched to a network requirement are described. Figs. 18 and 19 are diagrams illustrating examples of the function rules. For example, by setting the function rule illustrated in Fig. 18 to a VNFC which provides a firewall function, http/ftp access is allowed and an attack is prevented. Further, for a VNFC which provides a load balancer function, by setting the function rule illustrated in Fig. 19, sequential distributions or distributions according to server load are performed. The description syntax of the function rule is different for each VNF.

In order to control the throughput performance of the node in virtualization technology, it is necessary to predict a processing performance of the node. PTL1 discloses an example of a technology related to such prediction of the processing performance of the node. In the technology described in PTL1, a prediction model of performance parameters of a system is generated based on access information collected from each server in the system when accessing the system.

### [Citation List]

### [Patent Literature]

[PTL1] Japanese Patent No. 4570527

### [Summary of Invention]

### [Technical Problem]

The contents described as the function rule affect the processing performance of each node instance (VNFC) of the node (VNF), in the virtualization technology described above, such as NFV or the like. For example, as functional contents described as the function rule increase, the contents to be processed by the VNFC increase. Accordingly, consumption of a CPU (Central Processing Unit) on which the VNFC is installed increases and time for processing also increases. Namely, there is a correlation between the processing performance (for example, an access processing ability per unit time) of the node instance (VNFC) and the contents described as the function rule.

However, in the above-mentioned technology described in PTL1, the contents described as the function rule set to the node is not taken into consideration. For this reason, it is not possible to predict the processing performance, according to the function rule, with high accuracy.

An object of the present invention is to solve the above-mentioned problem, and provide a service management system, a service management method, and a recording medium which can correctly estimate the processing performance of the node.

### [Solution to Problem]

A service management system according to an exemplary aspect of the present invention includes: feature extraction means for extracting a feature of each of one or more words included in a rule related to a service provided by a node; and performance model generation means for generating, based on a processing performance of the node at a time of applying the rule to the node, a performance model for correlating the feature of each of one or more words included in the rule and the processing performance of the node.

A service management method according to an exemplary aspect of the present invention includes: extracting a feature of each of one or more words included in a rule related to a service provided by a node; and generating, based on a processing performance of the node at a time of applying the rule to the node, a performance model for correlating the feature of each of one or more words included in the rule and the processing performance of the node.

A computer readable storage medium according to an exemplary aspect of the present invention records thereon a program causing a computer to perform a method including: extracting a feature of each of one or more words included in a rule related to a service provided by a node; and generating, based on a processing performance of the node at a time of applying the rule to the node, a performance model for correlating the feature of each of one or more words included in the rule and the processing performance of the node.

### [Advantageous Effects of Invention]

An advantageous effects of the present invention is that the processing performance of the node can be estimated correctly.

### [Brief Description of Drawings]

Fig. 1 is a block diagram illustrating a characteristic configuration according to an example embodiment of the present invention.
Fig. 2 is a block diagram illustrating a configuration according to the example embodiment of the present invention.
Fig. 3 is a block diagram illustrating a configuration of a service management system 100 implemented on a computer according to the example embodiment of the present invention.
Fig. 4 is a flowchart illustrating a feature vector generation process according to the example embodiment of the present invention.
Fig. 5 is a flowchart illustrating a performance model generation process according to the example embodiment of the present invention.
Fig. 6 is a flowchart illustrating a chain configuration generation process according to the example embodiment of the present invention.
Fig. 7 is a diagram illustrating an example of performance information 310 according to the example embodiment of the present invention.
Fig. 8 is a diagram illustrating an example of function rule information 320 according to the example embodiment of the present invention.
Fig. 9 is a diagram illustrating an example of generating a feature vector according to the example embodiment of the present invention.
Fig. 10 is a diagram illustrating an example of generating a performance model according to the example embodiment of the present invention.
Fig. 11 is a diagram illustrating an example of a performance model according to the example embodiment of the present invention.
Fig. 12 is a diagram illustrating an example of a chain definition 330 according to the example embodiment of the present invention.
Fig. 13 is a diagram illustrating an example of traffic information 340 according to the example embodiment of the present invention.
Fig. 14 is a diagram illustrating another example of generating a feature vector according to the example embodiment of the present invention.
Fig. 15 is a diagram illustrating an example of a chain configuration 350 according to the example embodiment of the present invention.
Fig. 16 is a diagram illustrating an example of a configuration of typical service chains.
Fig. 17 is a diagram illustrating an example of a node in typical NFV.
Fig. 18 is a diagram illustrating an example of a function rule.
Fig. 19 is a diagram illustrating another example of a function rule.

### [Description of Embodiments]

First, a configuration of an example embodiment of the present invention will be described.

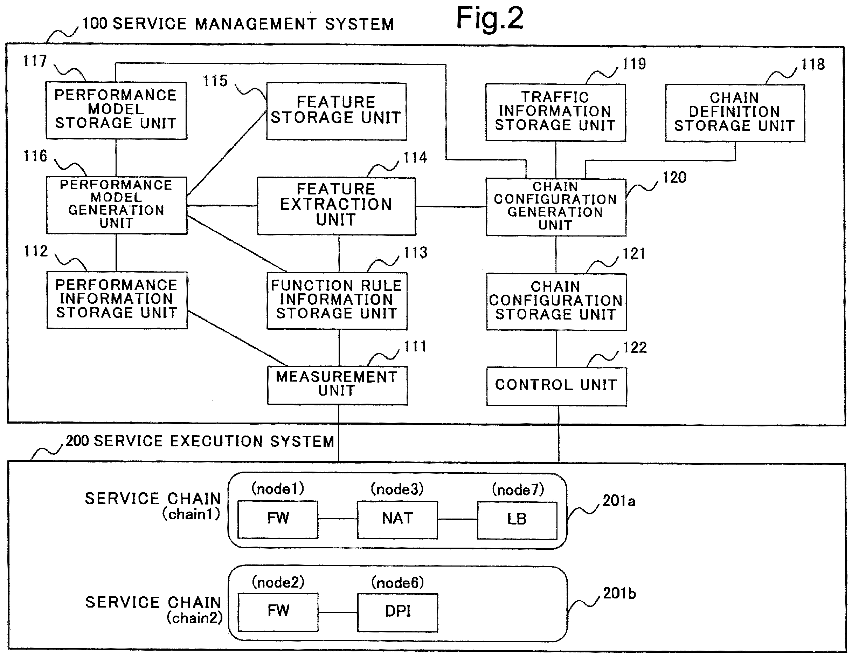

Fig. 2 is a block diagram illustrating a configuration according to the example embodiment of the present invention. Referring to Fig. 2, the example embodiment of the present invention includes a service management system 100 and a service execution system 200.

The service execution system 200 provides an environment on which one or more service chains 201 operate. Here, it is assumed that the service chain 201 is composed by using NFV that is virtualization technology mentioned above. Each service chain 201 is composed of one or more nodes (VNFs). Each node is composed of one or more node instances (VNFCs). Each node instance is deployed on one or more computers included in the service execution system 200 as a virtual machine.

Into the node instance of each node, a function rule is set by a user or the like. In the function rule, configurations of a network function to be provided by the node is described. The node instance provides the network function according to the function rule set to the node instance.

In the example illustrated in Fig. 2, as a service chain 201a "chain1", a node "node1" (FW), a node "node3" (NAT (Network Address Translation)), and a node "node7" (LB) are deployed. Further, as a service chain 201b "chain2", a node "node2" (FW) and a node "node6" (DPI (Deep Packet Inspection)) are deployed.

The service management system 100 includes a measurement unit 111, a performance information storage unit 112, a function rule information storage unit 113, a feature extraction unit 114, a feature storage unit 115, a performance model generation unit 116, and a performance model storage unit 117. The service management system 100 further includes a chain definition storage unit 118, a traffic information storage unit 119, a chain configuration generation unit 120 (hereinafter, also referred to as an instance number calculation unit), a chain configuration storage unit 121, and a control unit 122.

The measurement unit 111 acquires performance information 310 and function rule information 320 from each node of the service chain 201, and makes the performance information storage unit 112 and the function rule information storage unit 113 store the performance information 310 and the function rule information 320, respectively. The performance information 310 indicates a log of a service time (a time period for data processing) and a traffic amount (a data amount on a network), as a processing performance of the node. The function rule information 320 indicates a log of setting a function rule to the node.

The performance information storage unit 112 stores the performance information 310 acquired by the measurement unit 111.

The function rule information storage unit 113 stores the function rule information 320 acquired by the measurement unit 111.

The feature extraction unit 114 extracts, for each function rule, features related to words described in the function rule. The feature extraction unit 114 narrows down the words to words that is effective for generating a performance model based on the features, and generates a feature vector to which features of the narrowed-down words are set as elements.

The feature storage unit 115 stores the feature vectors generated by the feature extraction unit 114.

The performance model generation unit 116 generates, based on the processing performance of the node at a time of applying the function rule to the node, a performance model in which the processing performance of the node and the feature vector are correlated, for each node type.

The performance model storage unit 117 stores the performance model generated by the performance model generation unit 116. The chain definition storage unit 118 stores a chain definition 330 for the service chain 201 to be constructed. The chain definition 330 indicates a function rule (new function rule) to be set to each node of the service chain 201.

The traffic information storage unit 119 stores traffic information 340 for the service chain 201 to be constructed. The traffic information 340 indicates a maximum amount of traffic to be processed by the service chain 201 to be constructed.

The chain configuration generation unit 120 estimates, for the service chain 201 to be constructed, a processing performance of a node for a function rule to be set, by using the performance model. The chain configuration generation unit 120 generates a chain configuration 350 based on the estimated processing performance. The chain configuration 350 indicates the number (scale number) of the node instances, in each node of the service chain 201, for satisfying a predetermined condition.

The chain configuration storage unit 121 stores the chain configuration 350 generated by the chain configuration generation unit 120.

The control unit 122 constructs the service chain 201 indicated by the chain configuration 350, on the service execution system 200.

The service management system 100 may be a computer which includes a CPU and a storage medium storing a program and operates under control of the program.

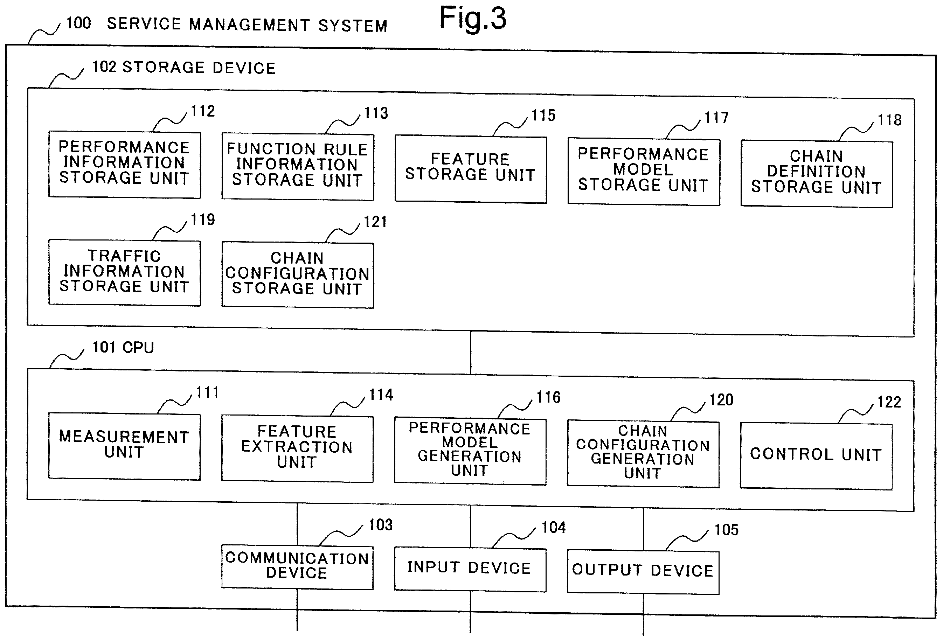

Fig. 3 is a block diagram illustrating a configuration of the service management system 100 implemented on a computer, according to the example embodiment of the present invention.

In this case, the service management system 100 includes a CPU 101, a storage device 102 (storage medium) such as a hard disk, a memory, or the like, a communication device 103 which communicates with another device or the like, an input device 104 such as a keyboard or the like, and an output device 105 such as a display or the like. The CPU 101 executes a computer program for implementing the measurement unit 111, the feature extraction unit 114, the performance model generation unit 116, the chain configuration generation unit 120, and the control unit 122. The storage device 102 stores data about the performance information storage unit 112, the function rule information storage unit 113, the feature storage unit 115, the performance model storage unit 117, the chain definition storage unit 118, the traffic information storage unit 119, and the chain configuration storage unit 121. The communication device 103 receives the performance information 310 of each node from the service execution system 200. Further, the communication device 103 transmits an instruction to construct the service chain 201 to the service execution system 200. The input device 104 receives an input of the chain definition 330 and the traffic information 340 from the user or the like. The output device 105 outputs a result of generating the service chain 201 to the user or the like.

Note that the components of the service management system 100 may be independent logic circuits.

Alternatively, the components of the service management system 100 may be distributively arranged in a plurality of physical devices connected via a wired or wireless channel. For example, the feature extraction unit 114, the performance model generation unit 116, and the chain configuration generation unit 120 may be implemented by a single computer, and the other components may be arranged outside the computer.

Next, the operation of the example embodiment of the present invention will be described.

### <Feature vector generation process>

First, a feature vector generation process of the example embodiment of the present invention will be described.

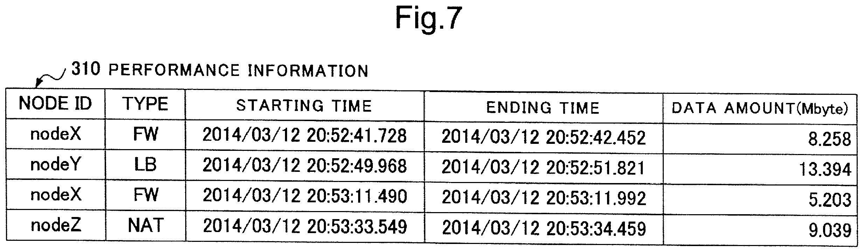

Fig. 7 is a diagram illustrating an example of performance information 310 according to the example embodiment of the present invention. In a log registered to the performance information 310, a node type, a starting time of data processing, an ending time of the data processing, and a data amount are associated with an identifier (node ID) of a node.

The measurement unit 111 acquires the log as illustrated in Fig. 7, while a single node instance operates in each node of the service chain 201, for example, for each processing unit of data (a packet or a session), and registers it in the performance information 310.

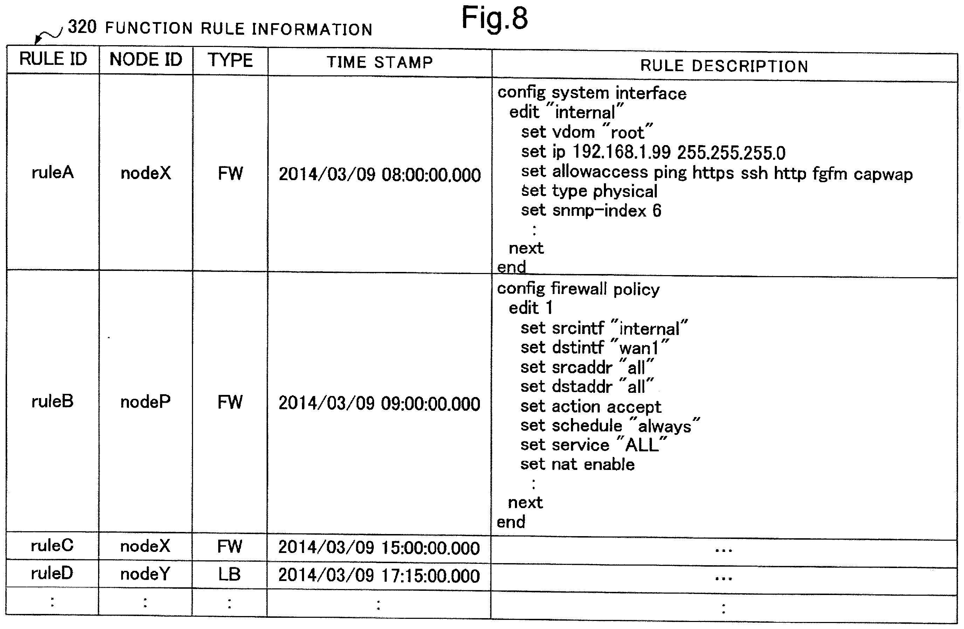

Fig. 8 is a diagram illustrating an example of the function rule information 320 according to the example embodiment of the present invention. In a log registered to the function rule information 320, an identifier (node ID) of a node to which a function rule is set, a node type, a setting time (time stamp), and contents of the function rule (rule description) are associated with an identifier (node ID) of the function rule.

When the user or the like newly sets or updates a function rule to each node in the service chain 201, the measurement unit 111 acquires the log as illustrated in Fig. 8 and registers it in the function rule information 320.

Here, it is assumed that the measurement unit 111 acquires the performance information 310 illustrated in Fig. 7 and the function rule information 320 illustrated in Fig. 8 from the service execution system 200 in advance, stores them in the performance information storage unit 112 and the function rule information storage unit 113, respectively.

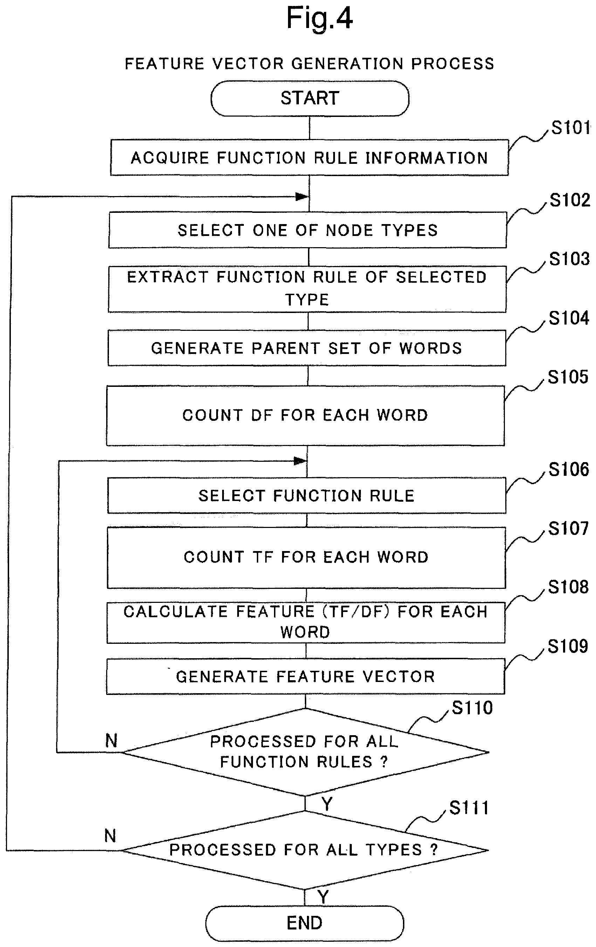

Fig. 4 is a flowchart illustrating a feature vector generation process according to the example embodiment of the present invention.

In the example embodiment of the present invention, the feature extraction unit 114 calculates an appearance frequency of each word included in a function rule as a feature, by using a TF-iDF (Term Frequency - inverted Document Frequency) method.

The feature extraction unit 114 of the service management system 100 acquires function rule information 320 from the function rule information storage unit 113 (step S101).

For example, the feature extraction unit 114 acquires the function rule information 320 illustrated in Fig. 8.

The feature extraction unit 114 selects one of node types (step S102).

For example, the feature extraction unit 114 selects a node type "FW".

The feature extraction unit 114 extracts function rules of the selected type from the log of the function rule information 320 (step S103). It is assumed that the number of the extracted function rules is N.

For example, the feature extraction unit 114 extracts function rules "ruleA", "ruleB", ... of the node type "FW".

The feature extraction unit 114 generates, from the N function rules, a parent set of words used for describing the function rules (step S104). The parent set of words represents all the words included in the N function rules. The feature extraction unit 114 counts, for each word included in the parent set, the number (DF: Document Frequency) of function rules in which the word is included (step S105).

For example, the feature extraction unit 114 counts the number of function rules DF as "11" for a word "vdom" included in the function rules "ruleA", "ruleB", ....

The feature extraction unit 114 selects one of the N function rules (step S106).

For example, the feature extraction unit 114 selects the function rule "ruleA".

The feature extraction unit 114 counts, for each word included in the selected function rule, the number (TF: Term Frequency) of appearance times of the word in the function rule (step S107).

For example, the feature extraction unit 114 counts the number of appearance times TF of the word "vdom" as "3" for the function rule "ruleA".

The feature extraction unit 114 calculates a value obtained by dividing a value of TF by a value of DF of the word. When the calculated value is equal to or greater than a predetermined threshold, the feature extraction unit 114 selects the calculated value as a feature of the word in the function rule (step S108).

For example, when the threshold value is "0.02", the feature extraction unit 114 determines a value of "0.278" calculated by TF/DF as a feature W_vdom_ruleA of the word "vdom".

Thus, when a value obtained by dividing TF by DF is equal to or greater than the predetermined threshold, the obtained value is selected as a feature. Whereby, a feature of a word that is meaningless to a function rule can be excluded (features can be narrowed down into those of words that are effective to the function rule).

The feature extraction unit 114 generates a feature vector of the function rule by setting features obtained for respective words to the feature vector, which includes features of respective words included in the parent set as an element (step S109). The feature extraction unit 114 stores the generated feature vector in the feature storage unit 115.

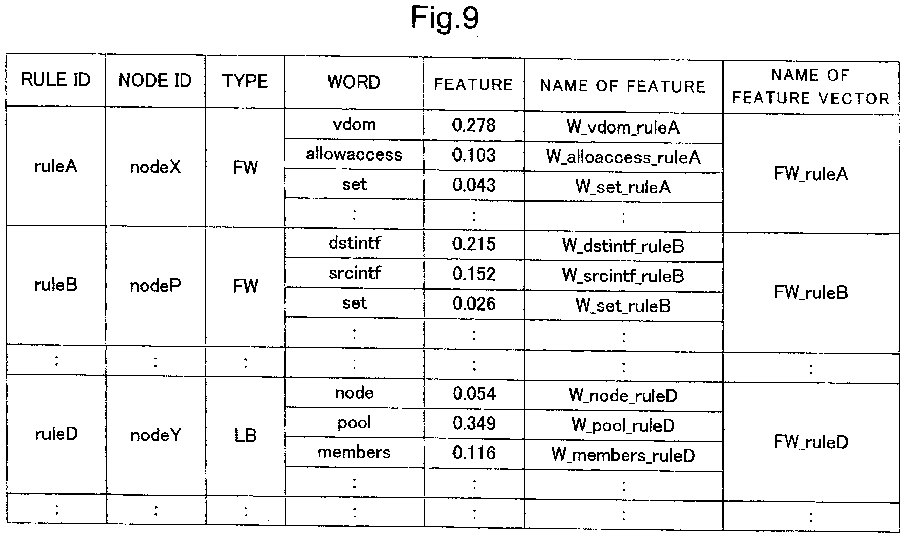

Fig. 9 is a diagram illustrating an example of generating a feature vector according to the example embodiment of the present invention.

For example, the feature extraction unit 114 sets the feature W_vdom_ruleA "0.278" to a feature vector FW_ruleA of the function rule "ruleA".

The feature extraction unit 114 repeats the processes from step S106 for each of the N function rules (step S110).

The feature extraction unit 114 repeats the processes from step S102 for each of all the node types (step Sill).

For example, the feature extraction unit 114 calculates features for each of the function rules "ruleA", "ruleB", ... , and generates the feature vectors FW_ruleA, FW_ruleB, and ... , as illustrated in Fig. 9.

### <Performance model generation process>

Next, a performance model generation process of the example embodiment of the present invention will be described.

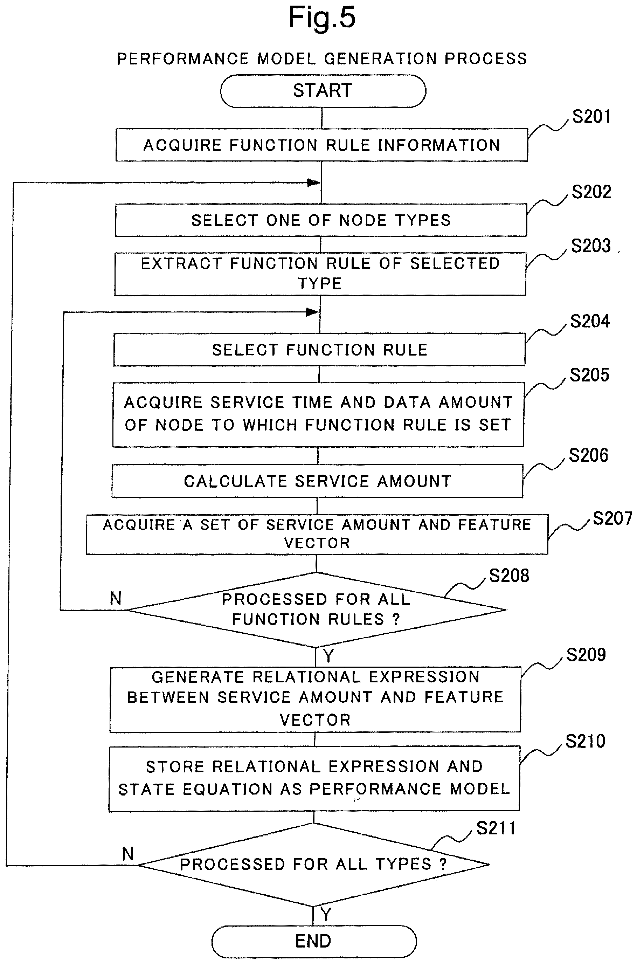

Fig. 5 is a flowchart illustrating the performance model generation process according to the example embodiment of the present invention.

First, the performance model generation unit 116 acquires function rule information 320 from the function rule information storage unit 113 (step S201).

For example, the performance model generation unit 116 acquires the function rule information 320 illustrated in Fig. 8.

The performance model generation unit 116 selects one of node types (step S202).

For example, the performance model generation unit 116 selects a node type "FW".

The performance model generation unit 116 extracts function rules of the selected type (step S203). It is assumed that the number of the extracted function rules is N.

For example, the performance model generation unit 116 extracts the function rules "ruleA", "ruleB", ... of the node type "FW".

The performance model generation unit 116 selects one of the N function rules (step S204).

For example, the performance model generation unit 116 selects the function rule "ruleA".

The performance model generation unit 116 acquires, for a node to which the selected function rule is set, a service time and a data amount from the performance information 310 of the performance information storage unit 112 (step S205). Here, the performance model generation unit 116 acquires service times and data amounts in a predetermined period of time from the time indicated by the time stamp of the selected function rule. The service time is calculated as a difference between the starting time and the ending time in each entry of a log of the performance information 310.

For example, the performance model generation unit 116 acquires service times and data amounts in a predetermined period of time from the time indicated by the time stamp of "2014/03/09 08:00:00.000" from the performance information 310 illustrated in Fig. 7, for a node "nodeX" to which the function rule "ruleA" is set.

The performance model generation unit 116 calculates an average service time and an average data amount based on the acquired service times and data amounts in the predetermined period of time. The performance model generation unit 116 calculates a value by dividing the average service time by the average data amount, as a service amount (step S206).

For example, the performance model generation unit 116 calculates a service amount µFW_ruleA based on the average service time and the average data amount.

The performance model generation unit 116 acquires the feature vector of the selected function rule from the feature storage unit 115, and acquires a set of the calculated service amount and the feature vector (step S207).

For example, the performance model generation unit 116 acquires a set of the service amount µFW_ruleA and the feature vector FW_ruleA illustrated in Fig. 9.

The performance model generation unit 116 repeats the processes from step S204 for each of the N function rules (step S208).

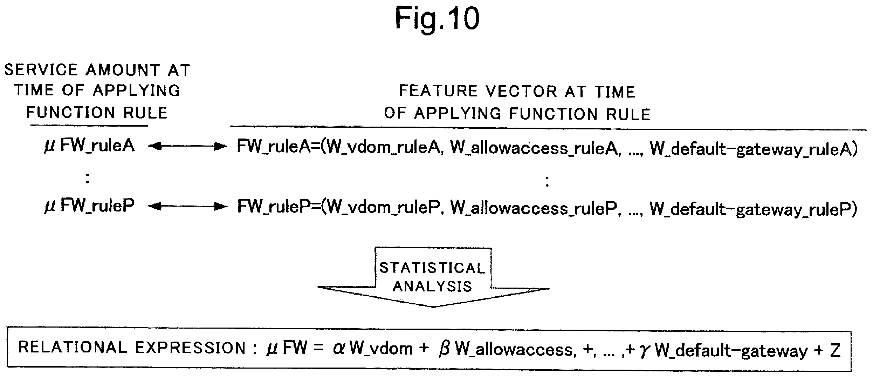

Fig. 10 is a diagram illustrating an example of generating the performance model according to the example embodiment of the present invention. For example, the performance model generation unit 116 acquires N sets (µFW_ruleA, FW_ruleA), ... , and (µFW_ruleP, FW_ruleP) of the service amount and the feature vector for each function rule, as illustrated in Fig. 10.

The performance model generation unit 116 performs a statistical analysis in which the service amount is used as an objective variable and each feature of the feature vector is used as an explanatory variable, based on the acquired N sets of the service amount and the feature vector, and generates a relational expression between the service amount and the feature vector (step S209).

For example, the performance model generation unit 116 determines coefficients α, β, γ, ... , Z of a relational expression µFW = αW_vdom + βW_allowaccess + ... + γW_default-gateway + Z based on the N sets of the service amount and the feature vector of the function rule, as illustrated in Fig. 10.

With this relational expression, a processing performance (service amount) of a node can be correctly estimated, based on the contents described in the function rule of the node.

In the example embodiment of the present invention, it is assumed that a behavior of a node can be abstracted by a state equation p = λ / Sµ of a queueing model (M/M/S) for a plurality of windows. Here, λ is an amount of arrival traffic, µ is the service amount mentioned above, and S is the number (scale number) of node instances which perform a parallel processing in the node. Further, p is an operation rate that indicates a degree (0 to 1) of processing congestion in each node. A value of the operation rate ρ, which is to be satisfied by the service chain 201, is specified by user or the like. Note that, as the operation rate p is close to 1 (it is equal to or greater than 0.8), a waiting time becomes extremely long. Therefore, a value of about 0.5 to 0.7 is set as the operation rate p.

The performance model generation unit 116 stores the relational expression generated in step S208 and the above-mentioned state equation, in the performance model storage unit 117, as a performance model (step S210).

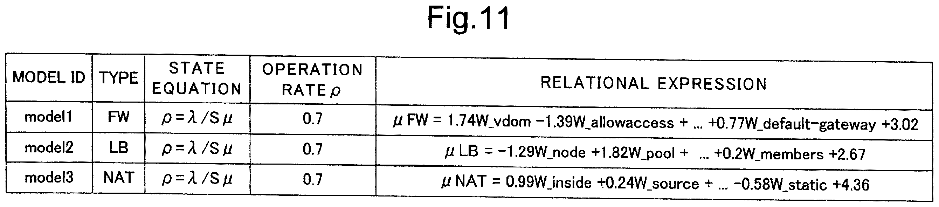

Fig. 11 is a diagram illustrating an example of a performance model according to the example embodiment of the present invention. For example, the performance model generation unit 116 generates a performance model "model1" illustrated in Fig. 11 for the node type "FW". In the example illustrated in Fig. 11, "0.7" is specified as an operation rate p to suppress a waiting time.

The performance model generation unit 116 repeats the processes from step S202 for each of all the node types (step S211).

For example, the performance model generation unit 116 generates performance models "model1", "model2", "model3", ... , for types "FW", "LB", "NAT", ... , respectively, as illustrated in Fig. 11.

### <Chain configuration generation process>

Next, a chain configuration generation process of the example embodiment of the present invention will be described.

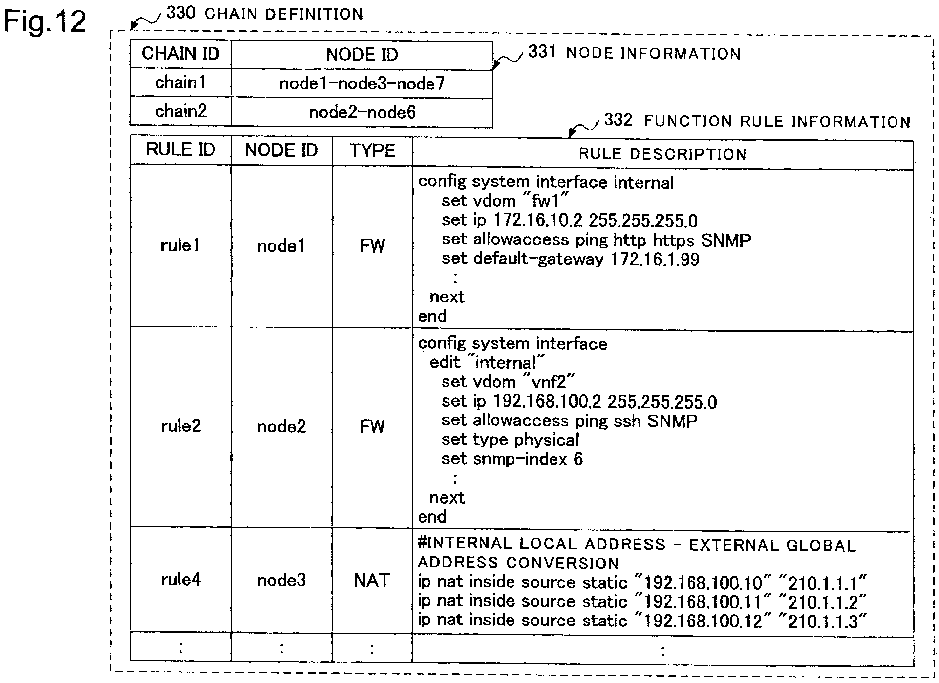

Fig. 12 is a diagram illustrating an example of a chain definition 330 according to the example embodiment of the present invention. The chain definition 330 includes node information 331 and function rule information 332. The node information 331 indicates, for an identifier (chain ID) of a service chain 201, identifiers (node IDs) of nodes of the chain in the arrangement order of the nodes in the chain. The function rule information 332 indicates, for each identifier (rule ID) of the function rule, an identifier (node ID) of a node to which the function rule is set, a type of the node, and contents (rule description) of the function rule.

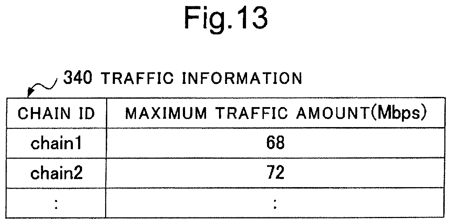

Fig. 13 is a diagram illustrating an example of traffic information 340 according to the example embodiment of the present invention. The traffic information 340 indicates, for an identifier (chain ID) of a service chain 201, the maximum amount of traffic to be processed by the service chain 201.

Here, it is assumed that the chain definition 330 illustrated in Fig. 12 and the traffic information 340 illustrated in Fig. 13 are stored in the chain definition storage unit 118 and the traffic information storage unit 119, respectively, by the user or the like in advance, as a chain definition 330 of a chain to be constructed and traffic information 340 thereof.

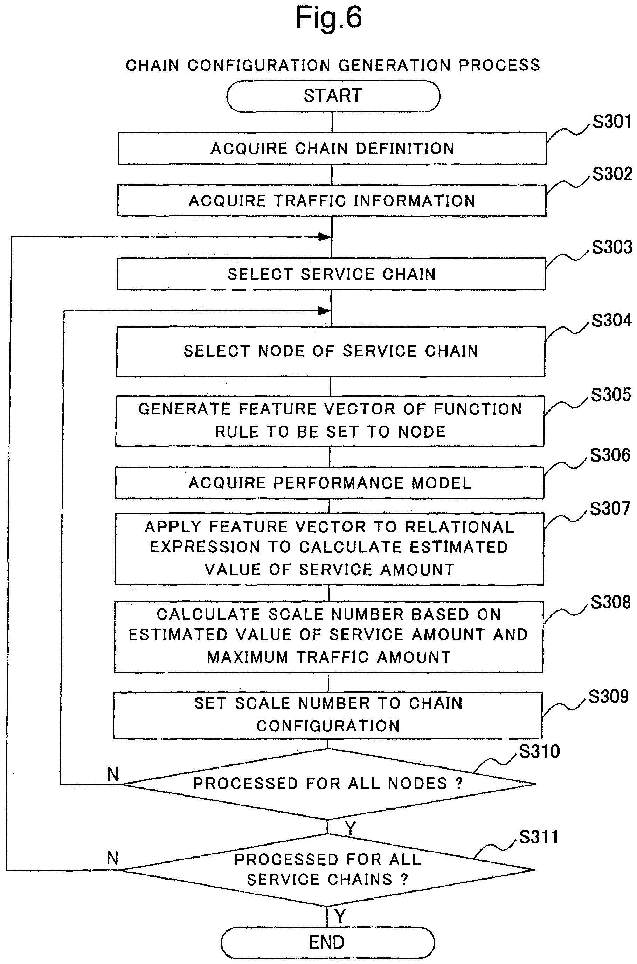

Fig. 6 is a flowchart illustrating the chain configuration generation process according to the example embodiment of the present invention.

The chain configuration generation unit 120 acquires a chain definition 330 from the chain definition storage unit 118 (step S301).

For example, the chain configuration generation unit 120 acquires the chain definition 330 illustrated in Fig. 12.

The chain configuration generation unit 120 acquires traffic information 340 from the traffic information storage unit 119 (step S302).

For example, the chain configuration generation unit 120 acquires the traffic information 340 illustrated in Fig. 13.

The chain configuration generation unit 120 selects one of service chains 201 included in the acquired chain definition 330 (step S303).

For example, the chain configuration generation unit 120 selects a service chain 201 "chain1".

The chain configuration generation unit 120 selects one of nodes of the selected service chain 201, indicated by the chain definition 330 (step S304).

For example, the chain configuration generation unit 120 selects a node "node1".

The chain configuration generation unit 120 generates a feature vector of a function rule to be set to the selected node, indicated by the chain definition 330 (step S305). Here, the chain configuration generation unit 120 inputs the function rule to the feature extraction unit 114, and makes the feature extraction unit 114 generate the feature vector. The feature extraction unit 114 performs processes similar to those of steps S106 to S109 mentioned above, and generates the feature vector of the inputted function rule. Here, when extracting a feature for each word, the value of DF, which has been calculated in step S105 for the type of the function rule, is used.

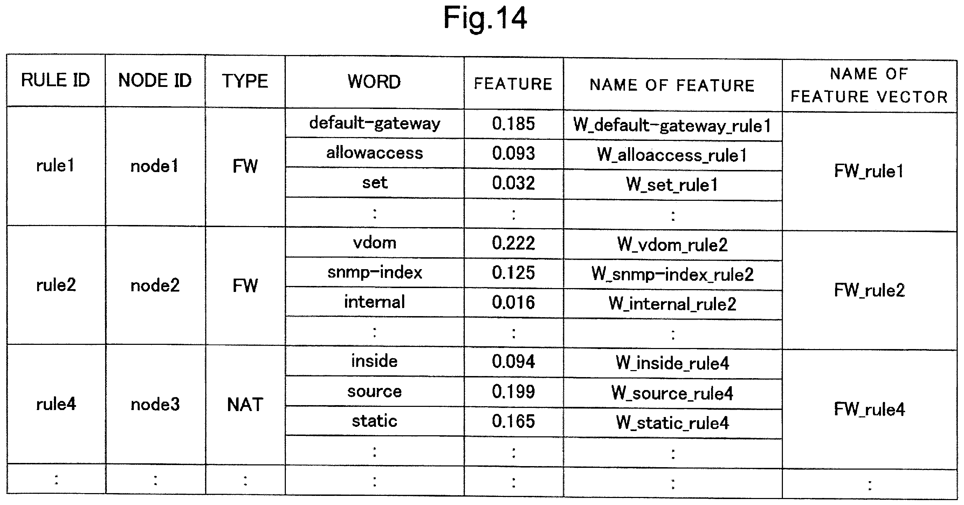

Fig. 14 is a diagram illustrating another example of generating a feature vector according to the example embodiment of the present invention. For example, the chain configuration generation unit 120 calculates a feature vector "FW_rule1" for the function rule "rule1" to be set to the node "node1", as illustrated in Fig. 14.

The chain configuration generation unit 120 acquires a performance model associated with a type of the selected node, indicated by the chain definition 330, from the performance model storage unit 117 (step S306).

For example, the chain configuration generation unit 120 acquires the performance model "model1" illustrated in Fig. 11, as a performance model associated with the type "FW".

The chain configuration generation unit 120 applies the features of respective words of the feature vector acquired in step S305 to the relational expression indicated by the acquired performance model, and calculates an estimated value of the processing performance (service amount) of the node (step S307).

For example, the chain configuration generation unit 120 applies the features of the feature vector "FW_rule1" to the relational expression of the performance model "model1", and calculates the estimated value of the service amount 'µFW_rule1_est".

The chain configuration generation unit 120 calculates the number (scale number) of node instances based on the calculated estimated value of the service amount and the maximum traffic amount of the service chain 201 indicated by the traffic information 340 (step S308). Here, the chain configuration generation unit 120 applies the estimated value of the service amount and the maximum traffic amount to the state equation p = λ / Sµ indicated by the performance model, and calculates a scale number S that satisfies the operation rate p.

For example, the chain configuration generation unit 120 applies the service amount "µFW-rule1_est", the maximum traffic amount "68Mbps", and the operation rate p "0.7" to the state equation, and calculates a scale number S "2".

The chain configuration generation unit 120 sets the calculated scale number S to the chain configuration 350 (step S309).

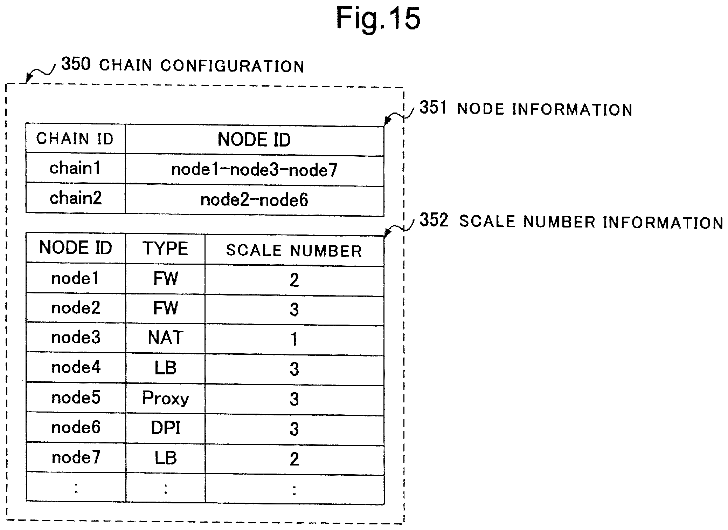

Fig. 15 is a diagram illustrating an example of a chain configuration 350 according to the example embodiment of the present invention. The chain configuration 350 includes node information 351 and scale number information 352. The node information 351 indicates contents that are the same as contents of the node information 331 of the chain definition 330. The scale number information 352 indicates, for each identifier (node ID) of the node, a type of the node and a scale number.

For example, the chain configuration generation unit 120 sets the scale number "2" for the node "node1", as illustrated in the chain configuration 350 of Fig. 15.

The chain configuration generation unit 120 repeats the processes from step S304, for each of all the nodes of the service chain 201 (step S310).

Further, the chain configuration generation unit 120 repeats the processes from steps S303 for each of all the service chains 201 included in the chain definition 330 (step S310).

For example, the chain configuration generation unit 120 sets a scale number for each of the nodes "node1", "node2", "node3", ... of each of service chains 201, as illustrated in the chain configuration 350 of Fig. 15.

The chain configuration generation unit 120 stores the generated chain configuration 350 in the chain configuration storage unit 121.

Finally, the control unit 122 constructs each service chain 201 indicated by the chain configuration 350 of the chain configuration storage unit 121, on the service execution system 200. Here, the control unit 122 deploys node instances of a virtual machine for each node of each service chain 201. The number of the node instances to be deployed is indicated by the scale number. The control unit 122 sets the function rule to each node instance, and makes the node instance operate.

For example, the control unit 122 constructs the service chains 201 "chain1", "chain2", ... , based on the chain configuration 350 illustrated in Fig. 15. The control unit 122 deploys two node instances for the node "node1" whose type is "FW", one node instance for the node "node3" whose type is "NAT", and two node instances for the node "node7" whose type is "LB" to the service chain 201 "chain1". Similarly, the control unit 122 deploys three node instances for the node "node2" whose type is "FW" and three node instances for the node "node6" whose type is "DPI" to the service chain 201 "chain2".

This completes the operation of the example embodiment of the present invention.

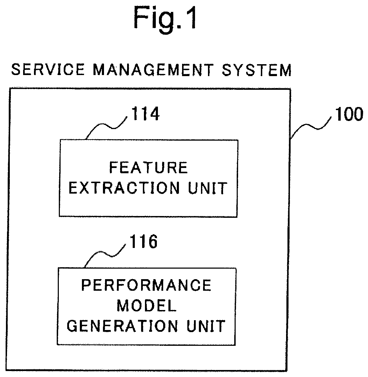

Next, a characteristic configuration of the example embodiment of the present invention will be disclosed. Fig. 1 is a block diagram illustrating the characteristic configuration according to the example embodiment of the present invention.

Referring to Fig. 1, a service management system 100 of the present invention includes a feature extraction unit 114 and a performance model generation unit 116. The feature extraction unit 114 calculates a feature of each of one or more words included in a function rule related to a service provided by a node. The performance model generation unit 116 generates, based on a processing performance of the node at a time of applying the function rule to the node, a performance model for correlating the feature of each of one or more words included in the function rule and the processing performance of the node.

According to the example embodiment of the present invention, a processing performance of a node can be estimated correctly. The reason is that the service management system 100 extracts features of words included in a function rule, and generates, based on a processing performance at a time of applying the function rule to the node, a performance model for correlating the features of the words included in the function rule and the processing performance of the node.

Further, according to the example embodiment of the present invention, it is possible to correctly estimate the number of node instances to be deployed for the node. The reason is that the service management system 100 estimates, for a new function rule, a processing performance of the node, by using the generated performance model, and calculates the number of the node instances for satisfying a predetermined condition related to a service, based on the estimated processing performance.

As a result, in the service chain in which one or more nodes are connected, it is possible to determine the number of the node instances to be deployed for each node and obtain an optimized chain configuration.

While the present invention has been particularly shown and described with reference to the example embodiments thereof, the present invention is not limited to the embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2015-120739, filed on June 16, 2015, the disclosure of which is incorporated herein in its entirety by reference.

### [Industrial Applicability]

The present invention can be widely applied to estimate a performance of a node which provides a service and determine the number of nodes to be deployed. For example, the present invention can be applied to control the parallel number of the nodes which provide a network service in a communication network, in response to changing a function rule set to the node.

### [Reference signs List]

- 100: service management system
- 101: CPU
- 102: storage device
- 103: communication device
- 104: input device
- 105: output device
- 111: measurement unit
- 112: performance information storage unit
- 113: function rule information storage unit
- 114: feature extraction unit
- 115: feature storage unit
- 116: performance model generation unit
- 117: performance model storage unit
- 118: chain definition storage unit
- 119: traffic information storage unit
- 120: chain configuration generation unit
- 121: chain configuration storage unit
- 122: control unit
- 200: service execution system
- 201: service chain
- 310: performance information
- 320: function rule information
- 330: chain definition
- 331: node information
- 332: function rule information
- 340: traffic information
- 350: chain configuration
- 351: node information
- 352: scale number information

## Claims

1. A service management system comprising:
feature extraction means for extracting a feature of each of one or more words included in a rule related to a service provided by a node; and
performance model generation means for generating, based on a processing performance of the node at a time of applying the rule to the node, a performance model for correlating the feature of each of one or more words included in the rule and the processing performance of the node.

2. The service management system according to claim 1 further comprising:
instance number calculation means for estimating a processing performance of the node for a new rule by using the performance model, calculating a number of node instances for satisfying a predetermined condition related to the service based on the estimated processing performance, the node instances performing a process of the service in the node, and outputting the calculated number of node instances.

3. The service management system according to claim 2, wherein
the instance number calculation means calculate the number of node instances by applying the estimated processing performance, a maximum traffic amount for the node, and a predetermined operation rate to a predetermined queueing model.

4. The service management system according to claim 2 or 3, wherein
the instance number calculation means calculate, for each of one or more nodes in a service chain in which the one or more nodes are connected, the number of node instances of the corresponding node.

5. The service management system according to any one of claims 1 to 4, wherein
the feature of each of one or more words included in the rule is extracted based on a number of appearance times of the corresponding word in the rule.

6. The service management system according to any one of claims 1 to 5, wherein
the performance model generation means generate the performance model by performing a statistical analysis in which the processing performance of the node is used as an objective variable and the feature of each of one or more words is used as an explanatory variable.

7. A service management method comprising:
extracting a feature of each of one or more words included in a rule related to a service provided by a node; and
generating, based on a processing performance of the node at a time of applying the rule to the node, a performance model for correlating the feature of each of one or more words included in the rule and the processing performance of the node.

8. The service management method according to claim 7 further comprising:
estimating a processing performance of the node for a new rule by using the performance model, calculating a number of node instances for satisfying a predetermined condition related to the service based on the estimated processing performance, the node instances performing a process of the service in the node, and outputting the calculated number of node instances.

9. A computer readable storage medium recording thereon a program causing a computer to perform a method comprising:
extracting a feature of each of one or more words included in a rule related to a service provided by a node; and
generating, based on a processing performance of the node at a time of applying the rule to the node, a performance model for correlating the feature of each of one or more words included in the rule and the processing performance of the node.

10. The computer readable storage medium recording thereon the program, according to claim 9, causing the computer to perform the method further comprising:
estimating a processing performance of the node for a new rule by using the performance model, calculating a number of node instances for satisfying a predetermined condition related to the service based on the estimated processing performance, the node instances performing a process of the service in the node, and outputting the calculated number of node instances.
